# EUROPEAN PATENT SPECIFICATION

(11) **EP 0 411 796 B1**
(45) Date of publication and mention of the grant of the patent: **17.09.1997**
(21) Application number: 90307970.5
(22) Date of filing: 20.07.1990
(51) Int. Cl.: H04M 3/50, H04M 17/00, H04Q 11/04

(54) **Semi-automated operator assistance telecommunication calls**
Halbautomatische Fernmeldeanrufe mit Vermittlungshilfsplätzen
Appels de télécommunication semi-automatique à assistance d'opératrice

(30) Priority: 31.07.1989 US 388188; 31.07.1989 US 388189
(43) Date of publication of application: 06.02.1991
(60) Divisional application: 97101266.1
(73) Proprietor: AT&T Corp., New York, NY 10013-2412 (US)
(72) Inventor: Dorst, Gary Lewis, Brookfield, Illinois 60513 (US); Pope III, Francis Joseph, Naperville, Illinois 60565 (US)
(74) Representative: Buckley, Christopher Simon Thirsk

(56) References cited:
- EP-A- 0 185 365
- EP-A- 0 245 028
- REVIEW OF THE ELECTRICAL COMMUNICATION LABORATORIES vol. 33, no. 2, 1985, TOKYO(JP) pages 214 - 220 K. MATSUMOTO ET AL 'DIGITAL TELEPHONE SET'
- COMPUTER COMMUNICATIONS vol. 11, no. 4, August 1988, GUILDFORD GB pages 197 - 202 D.R. DAVIES ET AL 'USER-NETWORK INTERFACES'
- KONGRESSBAND TELEMATICA 8-10 JUNI 1988 MUNCHEN(DE) pages 336 - 350 A.REINHOLD 'ISDN-SCHNITTSTELLE UND ENDGERATE'
- PATENT ABSTRACTS OF JAPAN vol. 11, no. 249 (E-532)13 August 1987 & JP-A-62 061 461

## Description

This invention relates to methods of setting up an operator assistance call and to apparatus for signalling an operator assistance call request.

In the present mode for operating the public telephone network, toll and assistance operators are still required for a large class of these calls. For example, toll and assistance operators are required for processing calls such as station-to-station (station) collect calls; person-to-person (person) calls including sent paid, collect, and calling card calls; and bill-to-third party calls. Also, at the request of public telephone customers, operators are required to provide time and charges information at the conclusion of these processed calls.

Customer-dialed operator assistance calls are usually referred to as zero plus (0+) calls because the customers dial zero (signifying an operator assistance type call) plus a directory number. Operator calls that have no customer-dialed directory number are usually referred to as zero minus (0- or 00-) calls because customers do not dial further after having dialed one or two zeroes to get the intervention of an operator. A major expense in setting up operator assistance calls is the cost of the time of the operators whose services are required. In the past, the cost for setting up 0+ and 0- calls has been sharply reduced through the introduction of systems such as the Traffic Services Position System (TSPS) No. 1, and the Operator Services Position System (OSPS), both manufactured by AT&T Network Systems, which require that operators only be connected to a call during the call setup time and that operators may be recalled when needed for such operations as collecting an overtime charge on a coin call, notifying a customer of the elapsed time and charges for a call, or in response to an originating customer flash because of, for example, poor transmission or a poor connection. All of these conditions are detected by timing or in response to calling customer signals.

Even with these systems, for calls such as person and collect calls, there remains a substantial amount of recoverable time during which an operator must attend the call but is not actively servicing the call. This interval, for example, occurs from the time that a customer on a person sent paid call has given the identity of the telephone number and individual to whom he or she wants to talk and the time that the called telephone is answered. Arrangements to eliminate such intervals require that operators be readily disconnected and reconnected to calls.

Later arrangements reduce operator work time for collect calls and person-to-person calls (which include person-collect, person-paid, person calling card and person bill to third number). An example of such an arrangement is the more efficient call handling (MECH) process, described in a pending application of T.M. Bauer et al., Ser. No. 248,459 (US-A-4889375), wherein a first operator is connected to the call after the completion of customer dialing and, for a class of calls, this operator is disconnected from the call after determining the class of charge (COC) including the billing method and any required billing data; subsequently, a second operator who may or may not be the same as the first operator is connected to the call in response to the answer signal of the called customer. Such an arrangement reduces the operator work time on the call by making it unnecessary for an operator to be connected to the call during the call setup time and ringing interval and if the call is not answered, the second operator is not required at all.

In the MECH arrangement, the first operator may record the name of the calling party for a collect call, the name of the called party on a person call, and both names for a person collect call. Subsequently, when the second operator is attached to the call, the COC and previously entered name is displayed at the operator position of the second operator. Thus the second operator is ready to talk to the called party immediately upon being connected to the call without first having to ascertain from the calling party, the calling party's name or the name of the requested called party in a person call. Further, such an arrangement eliminates the need for the second operator to warn the called party that this is an operator assistance call and that the operator needs to ascertain information before talking further to the called party.

Although the MECH arrangement reduces operator work time on calls, there is a need to further reduce the amount of operator work time required to process the handling of such operator assistance calls, such as person, collect and bill to third party calls.

Another major expense in handling operator assistance calls is the cost of delivering time and charges information to a public telephone customer at the conclusion of a call. In the prior art, an operator delivers time and charges information responsive to a verbal request from the customer at the beginning of a call. The operator calls the customer's public telephone after his or her call is completed, and verbally relays the time and charges information.

A problem with the prior art method of delivering time and charges information is that operator work time is used in delivering the information. Furthermore, telephone network voice facilities are required for the operator to make the call to the customer's public phone. Thus, the prior art method incurs both the expense of operator work time, and the expense of using voice network facilities.

Prior art systems, such as the TSPS No. 1, and OSPS, require that operators may be recalled when needed for such operations as notifying a customer of the elapsed time and charges for a call, reduce operator work time in the setting up of operator assistance calls, but do not reduce operator work time or the use of network facilities for the delivery of time and charges information. Although MECH reduces the operator work time required to set up the call by making it unnecessary for an operator to be connected to the call during the call setup time and ringing interval, it does not reduce the expenses incurred for delivering time and charges information.

Thus, another problem with prior art operator assistance systems is that there is no satisfactory method of inexpensively delivering time and charges information to public telephone customers for operator assistance calls.

EP-A-0 245 028 discloses a system in which a calling party requesting operator assistance is initially connected to a voice processing system that recognizes spoken commands or a tone recognition system that recognizes keyed commands. The processing system analyzes the commands to identify the class of operator assistance call and defers connection to a human operator until assistance is actually required. The system also performs preprocessing and transaction recording functions. Such an arrangement reduces operator work time.

According to one aspect of this invention there is provided a method as claimed in claim 1.

According to another aspect of this invention there is provided apparatus as claimed in claim 15.

An exemplary embodiment of the invention features the use of an exemplary intelligent telecommunications station (intelligent phone) for collecting and transmitting call data to an operator assistance for initiating the setting up a call without the intervention of an operator and for automatically receiving data from a connected switching system after a call has been terminated and without an intervention of an operator. For collect, person, and bill to third party calls, a calling (back) party enters information identifying the class of charge (COC) into the intelligent phone. The phone then sends the call identification information to an operator assistance system as part of a signaling message to set up the call. By utilizing the COC information, connections for collect, person and bill to third party calls are set up without the intervention of an operator. Later, when the operator assistance system seizes an operator position to service the call after the call has been answered by the called or forward party, the call data is automatically displayed for the operator. Advantageously, neither an operator nor telephone network resources are required to gather COC information, thus significantly reducing operator work time and network resource usage. After the operator assistance call is terminated, the operator assistance system that processed the call sends a message including time and charges information for the call to the intelligent phone for displaying of that information. Advantageously, time and charges information are delivered to the customer without using operator work time or telephone network facilities to place a call.

In the exemplary embodiment CCITT (International Consultative Committee for Telephone and Telegraph) standard Layer 3 (Q.931) call control messages defined for message associated user-to-user information (MA-UUI) carry user-to-user information elements (UUIEs) to a MECH program process for collect, person-to-person, and bill to third party calls. A back party places a call by entering COC information (such as person or station call, collect or bill to third party call and the called party name and number) into an enhanced user interface payphone, which sends the information to the MECH process as a MA-UUI element of a Q.931 SETUP message. The MECH process sets-up the call to the forward party based on the information received in the UUIE. The MECH process waits until a called party answers the call and then activates a mechanism to seize an operator position, with the call information displayed at the position. Advantageously, an operator is not required to gather call information, thus, operator work time is significantly reduced.

After the call is terminated, the MECH process sends the time and charges information for the call to the back party's enhanced user interface phone as part of a UUIE of a Q.931 SETUP message. Responsive to receipt of this message, the enhanced user interface phone rejects the call setup request, and displays the time and charges information for the back party. Thus, time and charges information is delivered to the back party without a call being established. Advantageously, an operator is not required to deliver time and charges information.

In accordance with one aspect of the exemplary embodiment, the intelligent phone, an enhanced user interface payphone, interacts with a back party to gather call information by asking the back party questions via a display screen. The enhanced user interface payphone performs error checking on the information entered by the back party. The payphone is equipped to use MA-UUI signaling, and is connected to a central office telephone switching system via an integrated services digital network (ISDN) basic rate interface (BRI), thus providing an integrated voice and data communication facility. A network connection is established only after information required to initiated a call is verified. The enhanced user interface payphone then places the information in the UUIE of a Q.931 SETUP message and sends it to the MECH process. Advantageously, the enhanced user interface phone eliminates the need to use network facilities prior to receipt of verified call information.

In accordance with one aspect of the exemplary embodiment, the intelligent public telephone generates a unique station identifier with each call origination. This identifier is included in a UUIE of a Q.931 SETUP message, and uniquely links the public telephone, and the call data gathered at the public telephone, to the outgoing call. The identifier is used by the MECH process to (1) verify time and charges information and (2) signal the public telephone to reject the call setup request delivering the time and charges information, and thereby eliminating the need to establish a circuit switched B-channel call. Telephone network facilities are only required to send the call setup request message and call setup rejection message. Advantageously, less expense is incurred for use of network facilities than in prior art arrangements.

### Brief Description of the Drawing

FIG. 1 is a block diagram of an operator assistance switching system for processing operator assistance calls in accordance with the methods of FIGS. 2-8; and
FIGS. 2-8 are data layouts and flow diagrams of methods of processing operator assistance calls.

### Detailed Description

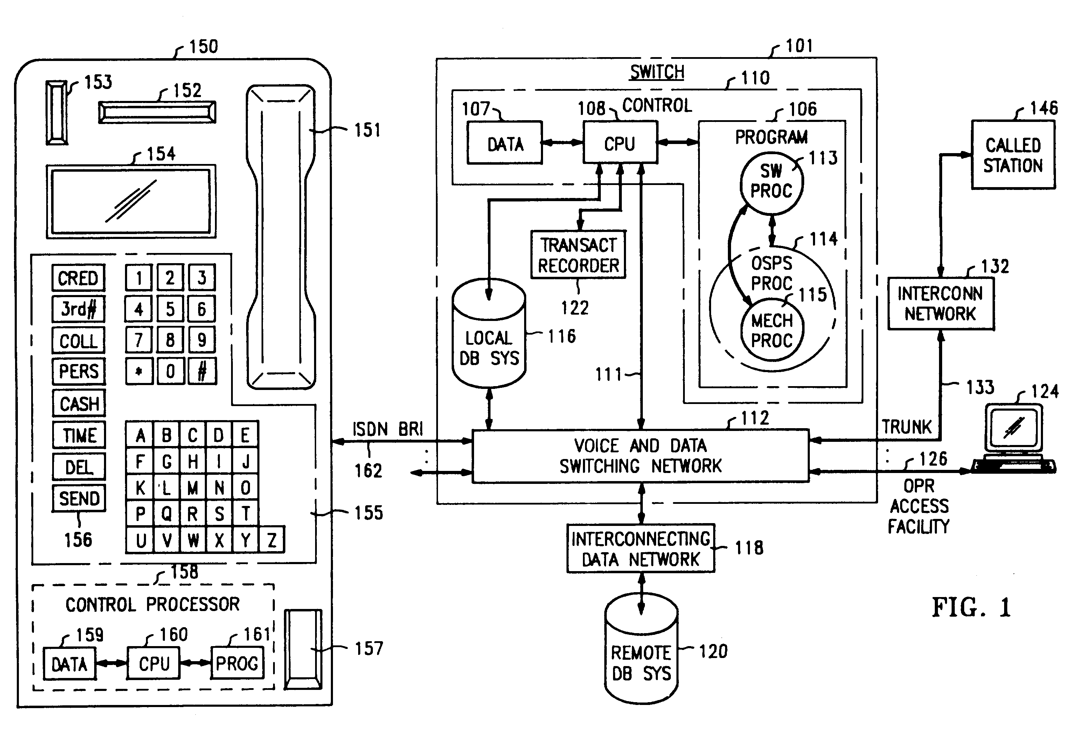

FIG. 1 is an architectural diagram of a system illustrating one embodiment of the present invention. The system comprises an "enhanced" public telephone 150, comprising a handset 151, a credit card reader 152, a coin slot 153, a display screen 154, a keyboard 155, a coin return slot 157, and a control processor 158, comprising a data store 159, a central processing unit (CPU) 160, and a program 161 for controlling the operations of the CPU 160. The public phone is equipped with an International Consultative Committee for Telephone and Telegraph (CCITT) Integrated Services Digital Network (ISDN) Basic Rate Interface (BRI), as described in CCITT Red Book Fascicle III.5 Series 1 Recommendation, and has the capability of handling standard Q.931 interface, as described in CCITT Red Book Fascicle VI.9 Recommendation Q.931. The public phone 150 uses CCITT standard message associated user-to-user information (MA-UUI) signaling, and is connected to a switching system 101 via an ISDN BRI 162.

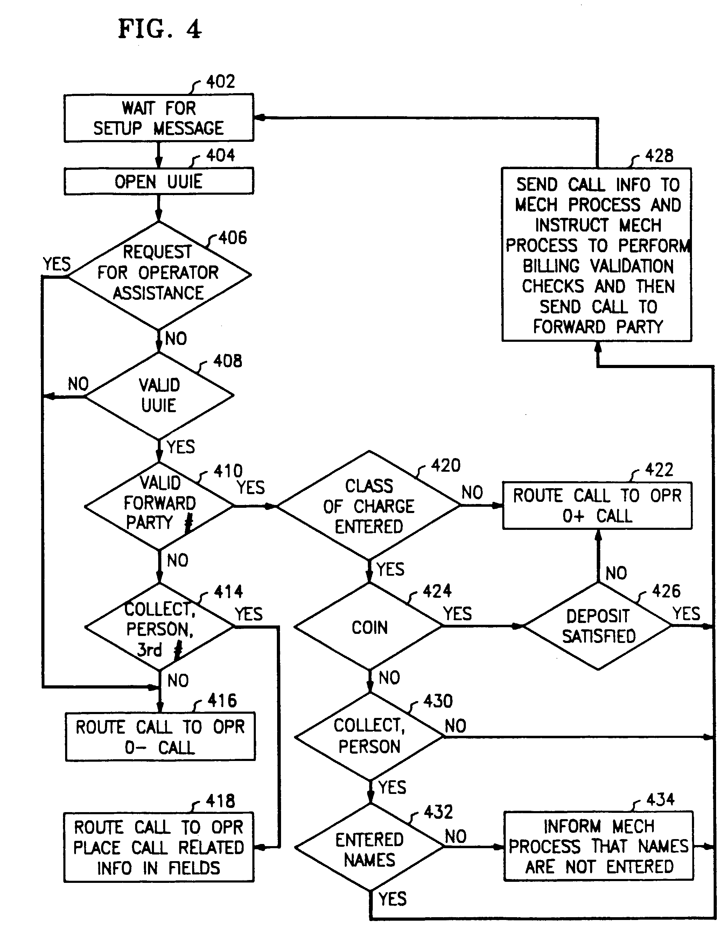

The switching system (switch) 101 is a 5ESS® switch, extensively described in AT&T Technical Journal, vol. 64, no. 6, part 2, pp. 1305-1564, July/August 1985, which also serves as an Operator Services Position System (OSPS) as described in N. X. DeLessio et al.: "An Integrated Operator Services Capability for the 5ESS Switching System", International Switching Symposium '84, (Florence), Session 22C, Paper 3, pp. 1-5, May 1984. The change required in the switching system to implement the present invention is the addition of a program in the control 110 of the switch for executing the tasks described in the flow charts of FIGS. 4-7. The switch 101 comprises a control 110 for controlling the switch. The control 110, in turn, comprises a central processing unit 108, a program 106 for controlling the operations of the central processing unit, and a data store 107 for storing call data. The program 106 comprises switching processes 113 to handle the switching of calls, an operator services position system (OSPS) process 114 to handle operator assistance calls, and the more efficient call handling (MECH) process 115 to more efficiently handle operator assistance calls. The switch also comprises a local data base system 116 for storing data such as: (1) customer lines connected to the system, such as the Q.931 equipped customer line 162, (2) interconnecting networks 132, (3) trunks, such as trunk 133 connected to the system, and (4) data about operator positions connected to the system, A transaction recorder 122 is used for recording billing data. The switch also comprises a voice and data switching network 112 which can be used for transmitting data among control unit 110 interconnecting data network 118 and operator access facility 126, and for transmitting voice among trunks coming into the system, such as trunk 133 to interconnecting network 132, customer lines such as customer line 162 and operator access facilities such as operator access facility 126. The interconnecting network 132 which may include one or more switching systems is used for accessing the called customer station 146 from switch 101. Operator position 124, connected to the voice and data switching network 112 by operator access facility 126, comprises a video terminal for displaying data obtained from control 110, local data base system 116, and remote data base system 120. While a typical system would have many operator positions attached, for clarity, only one is shown herein. Remote data base system 120 is connected to voice and data switching network 112 via interconnecting data network 118. Voice and data switching network 112 is connected to control unit 110 via a control connection 111. Interconnecting data network 118 and remote data base system 120 are used for obtaining data about the calling or called terminal and/or called station when this data is not available in the local data base system 116.

In this specific embodiment of the present invention, a calling (back) party makes a call from the public telephone 150 by entering call information on the keyboard 155, responsive to a request from a menu on the display screen 154. The back party completes the calling procedure by pressing the send button 157 on the keyboard 155. The enhanced public phone 150 then formats the call information into a user-to-user information element (UUIE) of a Q.931 SETUP message, places the UUIE into a SETUP message, and sends the message to the voice and data switching network 112 of the switching system 101, which routes the call to the OSPS process 114. The OSPS process 114 opens the to validate the call information and handle any error conditions, and sends the information to the MECH process 115. The MECH process 115 uses the information provided in the UUIE to set up a connection to a called (forward) party station 146. Once a connection to the forward party station 146 is set up via trunk 133 and interconnecting network 132 to forward party station 146, and an answer from the forward party station 146 is detected in the voice and data switching network 112 and relayed via control connection 111 to control 110, control 110 then informs the MECH process 115 and causes a connection to be set up. The MECH process 115 alerts the OSPS process 114 that an operator should be queued, and an operator position is connected to the call. The connection is among the back party station 150, the forward party station 146 and an operator position, similar to operator position 124, connected via its own operator access facility, similar to operator access facility 126. Data describing the call is then displayed on the operator's terminal to permit the operator to further control the call by signaling requests for changes in the call configuration to the control 110.

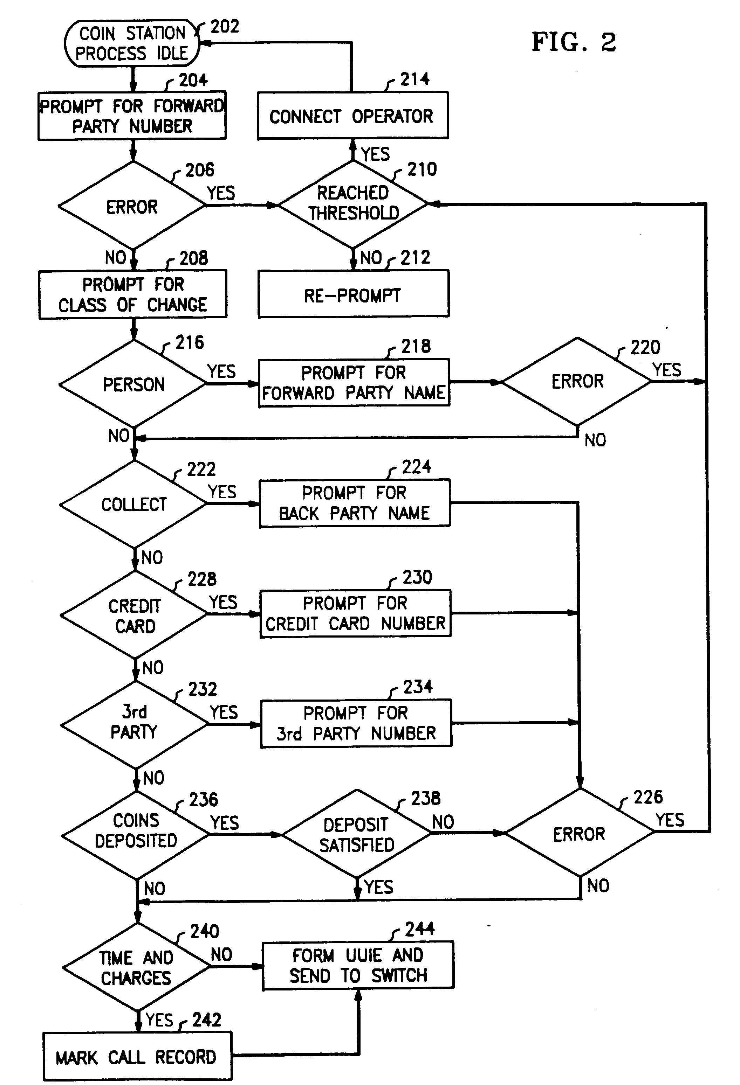

FIG. 2 is a flow diagram of an enhanced public phone program process (coin station process) which handles the collection and sending of call information. The process which is controlled within the public telephone 150 is inactive while the coin station is idle (block 202). The process begins when a back party enters a forward party number on the keyboard of the phone (action block 204). The process then checks for errors in the forward party number (test 206). If there are errors, an error handling procedure is invoked which does the following: (1) the procedure determines whether the back party has been re-prompted to enter the information a maximum number of times (test 210); (2) if threshold has not been reached, the process re-prompts the back party for the information (action block 212); however, if the threshold has been reached, the back party is connected to an operator (action block 214) and the process returns to its idle state (block 202). Otherwise, if no error occurred in entering the forward party number, the process checks for the class of charge (COC) entered by the back party (action block 208). If the call is a person call (test 216), the enhanced phone process then waits to receive the forward party name (action block 218); if the call is collect (test 222), the process waits to receive the back party name (action block 224); if the call is a credit call charge call (test 228), the process waits for a credit card number (action block 230); finally, if the call is a third party call (test 232), the process waits to receive the third party number to be billed (action block 234). If any errors occur in the tests or reception of any data (test 220 and test 226), the call is handled by the procedure described above.

After the COC is entered, the process then waits to receive any coins that need to be deposited (action block 236), and checks whether the required coin deposit, if any, is satisfied (test 238). If the deposit is not satisfied, the error treatment procedure, described above, is invoked; otherwise, the process next checks whether the back party wants to be informed of time and charges information after the call (test 240). If so, the call record is marked, i.e., a special octet is formed to indicate that time and charges information are requested (action block 242). Finally, the process uses the information provided by the back party together with a self generated unique coin station identifier (used for verification of proper time and charges information delivery) to form a UUIE (of a Q.93 1 SETUP message) to be sent to the MECH process in the switching system (action block 244), and the coin station returns to idle (block 202).

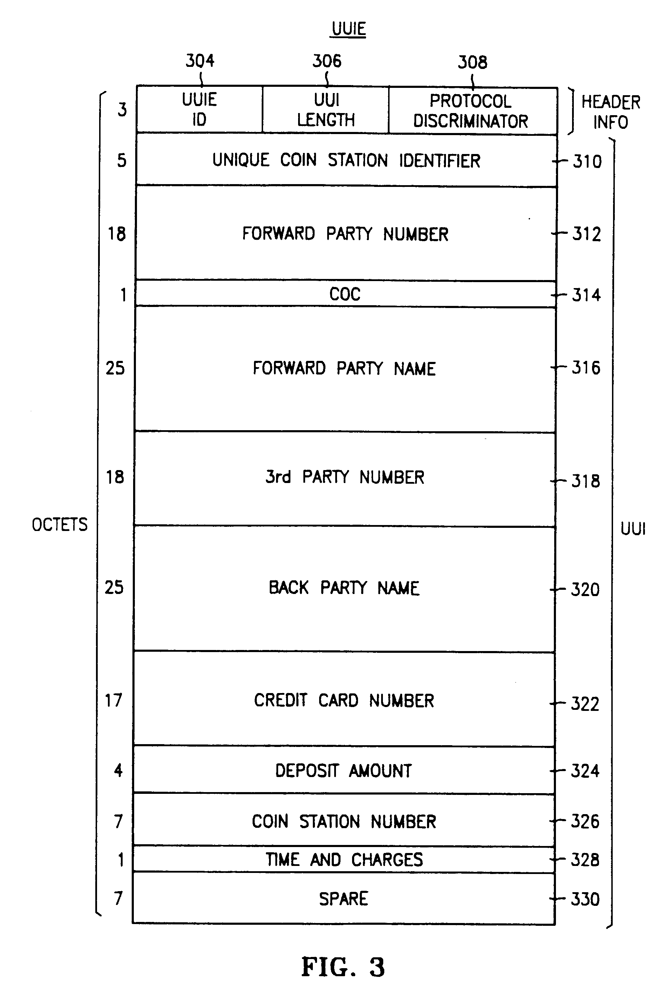

The Q.931 protocol limits the maximum length of the UUIE of a SETUP message to 131 octets, 128 of which may contain UUI and the remainder used for a message header. FIG. 3 is a diagram illustrating the structure of the UUIE in the present invention. The 3 octets of the message header contain call control information (CCI), comprising a UUIE ID 304, the length of the UUI 306, and a protocol discriminator 308. The specific embodiment of the present invention uses 121 of the possible 128 octets remaining for UUI. The UUI contains a unique coin station identifier 310, which identifies the call, a forward party number 312, the COC 314, the forward party name 316, a third party name 318, a back party name 320, a credit card number 322, a deposit amount 324, a coin station number 326, and one octet to signify a request for time and charges information 328. The remaining possible seven octets 330 are unused.

FIGS. 4-7 are flow diagrams of the method of one embodiment of the present invention, starting at the point after the Q.931 SETUP message has been sent by the back party station. These figures depict the operation of an operator assistance process, comprising the OSPS process 114, and the MECH process 115. Calls that are treated in accordance with the principles of this invention are called modified MECH calls Other calls are given treatment by "standard practices" signifying treatment in accordance with the normal practices for operator assistance calls of this type as described, for example, in the Bell System Technical Journal, (B.S.T.J.), vol. 58, no. 6, part 1, July/August 1979, and B.S.T.J., vol. 49, no. 10, December 1970, pp. 2417-2709, especially pp. 2625-2683.

The process waits for a SETUP message to arrive at the switching system (action block 402), opening the UUIE of a message once it arrives (action block 404). It next checks for a customer for a customer request for operator (OPR) assistance (test 406), routing the call to an operator (treating call as O-) if an OPR assistance signal is discovered (action block 416). Otherwise, the process checks whether the is valid under the protocol (test 408). If the UUIE is valid, the process then checks whether the UUIE contains a valid forward party number (action block 410), otherwise, the call is treated as a 0- call and routed to an operator (action block 416).

If the forward party number contained in the is invalid, the call is treated as a 0- call (action block 416). If the number is valid, then the call is a 0+ call; if not, the call must be sent to an operator in accordance with 0- call handling procedures, and the process then checks if the call is collect, person-to-person, or bill to third party call (test 414). The process places related call information for these types of calls into fields to be used by the operator (action block 418).

For the call is a 0+ call, the process next checks whether the class of charge for the call has been entered (test 420). If not, the call is routed to an operator (action block 422), otherwise the process next checks whether the call is a coin deposit call (test 424); if so, the process checks if the deposit has been satisfied (test 426). It routes the call to an operator if the deposit is unsatisfied (action block 422), otherwise, it sends the information contained in the UUIE to the modified MECH process, and instructs the modified MECH process to perform billing validation checks for the call and then sends the call to the forward party (action block 428).

Billing validation checks are performed in conformance with standard practices to see if the calling customer is entitled to place this type of call to the called station. For example, a collect call to a coin phone is not usually allowed. For the case of a person call that is to be billed to a third party, this includes verifying whether the third party accepts such billing or wishes to be called, and, if necessary, calling that third party to verify acceptance of the billing. The modified MECH process sends a call to a forward party by outpulsing the call to the telephone central office connected to the forward party. The back party is left to monitor the progress of the call. This "outpulsing" can be done over talking trunks or via separate common channel signaling facilities. It is the back party who detects busy or no answer and initiates a disconnect for those cases. The operator assistance system monitors the connection to detect the return of answer supervision.

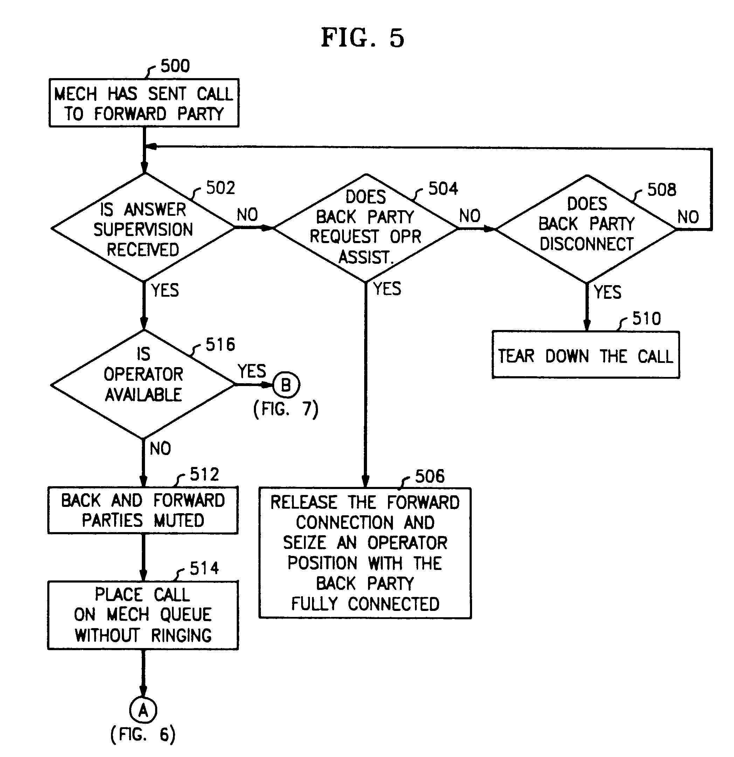

If the call is not a coin, the process checks the COC to determine whether the call is collect or person-to-person (test 430); if not, the call information for the call is sent to the modified MECH process, along with instructions to perform billing validation checks and send the call to the forward party (action block 428). Finally, if the call is a collect or person-to-person call, the process checks the to determine whether the required names have been entered (test 432); if not, the process informs the modified MECH process that the names have not been entered (action block 434), and performs the standard instruction procedures (action block 428). If the names have been entered, the standard instruction procedures are performed (action block 428). Subsequent actions are described with respect to the flow chart FIG. 5 starting with test 502.

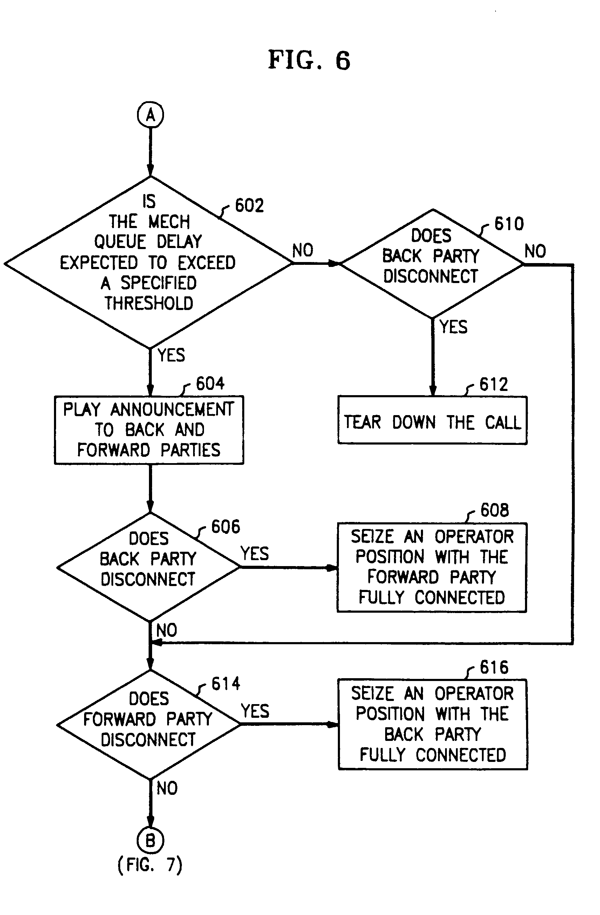

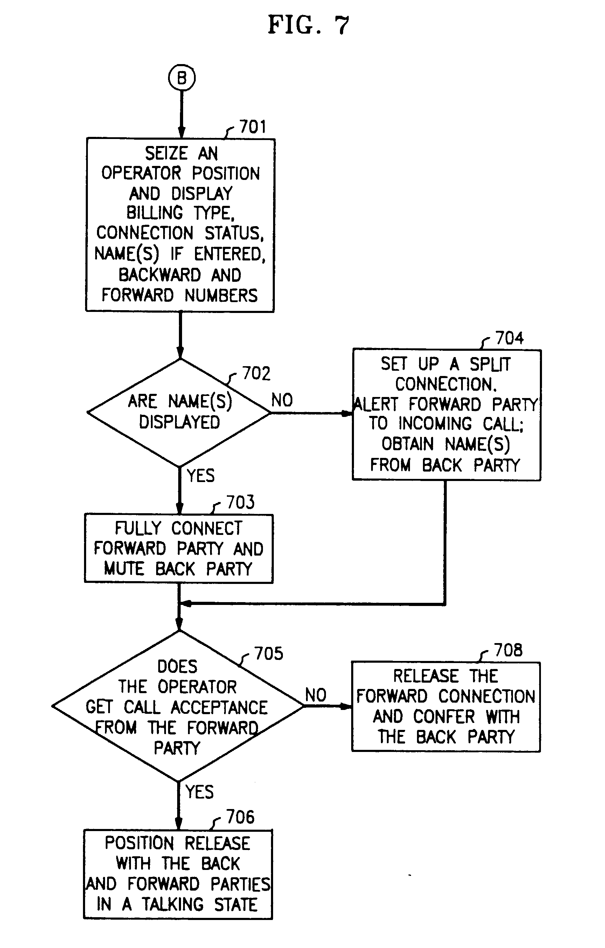

FIG. 5 describes the process of detecting an answer from the forward party and the actions performed immediately thereafter. Test 502 checks whether answer supervision is received, i.e., whether the forward party answers. If not, test 504 is performed to test whether the back party has requested OPR assistance. If the back party has requested OPR assistance, then the forward connection, i.e., the connection to the forward party is released and an operator position is connected to the back party to receive further instructions (action block 506). The back party and operator are fully connected to allow the calling customer to talk to and hear the operator at the operator position where the call history is displayed to the operator. If the back party does not request OPR assistance, a test is made to check whether the back party disconnects (test 508). If the back party disconnects, the call is torn down (action block 510). This action would be performed if the back party decides that the forward party is not answering or if the back party hears busy or overflow tone. If the back party does not disconnect, supervisory monitoring of the call for answer is resumed (test 502, previously discussed). If answer supervision is received as detected in test 502 and an OPR is available (test 516), then actions are performed in accordance with FIG. 7. If an OPR position is not available, the connection is arranged so that both the back and the forward parties are muted (action block 512), i.e., that neither calling nor called party can hear the other. The call is then placed on a high priority queue for an operator position without giving audible tone to either the back or the forward party in order to avoid confusion (action block 514). There may be several such queues in an operator assistance system, for queuing different types of modified MECH calls. Next, the actions described in FIG. 6 are performed starting with test 602.

FIG. 6 describes the actions performed until an operator position can be connected to the call. Test 602 determines whether the MECH queue (i.e, the queue in which the call was entered in action block 514) is expected to introduce a delay that exceeds a specified threshold. If so, an announcement is played to both the back and the forward parties (action block 604). The announcement might say: "Please hold, an operator will be connected promptly." If the back party disconnects, as determined by test 606, then an operator position is seized (action block 608) so that the operator may talk to the forward party to explain what happened. The operator position and the forward party are fully connected to allow them to talk to each other.

If the back party disconnects before an announcement is played, as determined by test 610, then the call is torn down (action block 612). If the back party does not disconnect, with or without the announcement, then a test is made to see whether the forward party has disconnected (test 614). If so, an operator position is seized and a connection is set up with the back party (action block 616). The back party and the operator are fully connected. Requests for OPR assistance by the back party are ignored, if received, prior to a forward party disconnect or prior to the actions to be discussed below with respect to FIG. 7, starting with action block 702, because the call is already on a high priority queue for an operator.

FIG. 7 describes the actions performed by the operator for a modified MECH call in the present invention. The operator position is seized, and the billing type, the connection status, and the forward and backward numbers, i.e., the called and calling numbers, are displayed (action block 701). If the appropriate names have been entered by the back party while placing the call, these are also displayed. Test 702 checks whether these names are displayed. If so, the operator signals for a connection wherein the called party is fully connected and the calling party is muted to prevent unauthorized transmission of a message from the calling party (action block 703). If not, the operator signals to set up a split connection, the called party is alerted by the operator that there is an incoming call, and the calling party is queried to obtain the appropriate name(s) (action block 704). This is the information needed by the operator to find out if a called party is willing to accept charges for a collect call, or to find out if the appropriate individual has answered a person-to-person call, and, if not, to ask for that appropriate individual. In either case, the operator seeks to get an acceptance of the call from the called party. If the operator is satisfied that the conditions for setting up the call have been met (positive output of test 705), then the operator position signals to be released from the call and the calling and called parties are connected in a full talking state (action block 706). If the operator fails to get an acceptance of the call (negative output of test 705), then the operator signals to release the forward connection (the connection to the called party) and confers further with the calling party via a full talking state connection (action block 708).

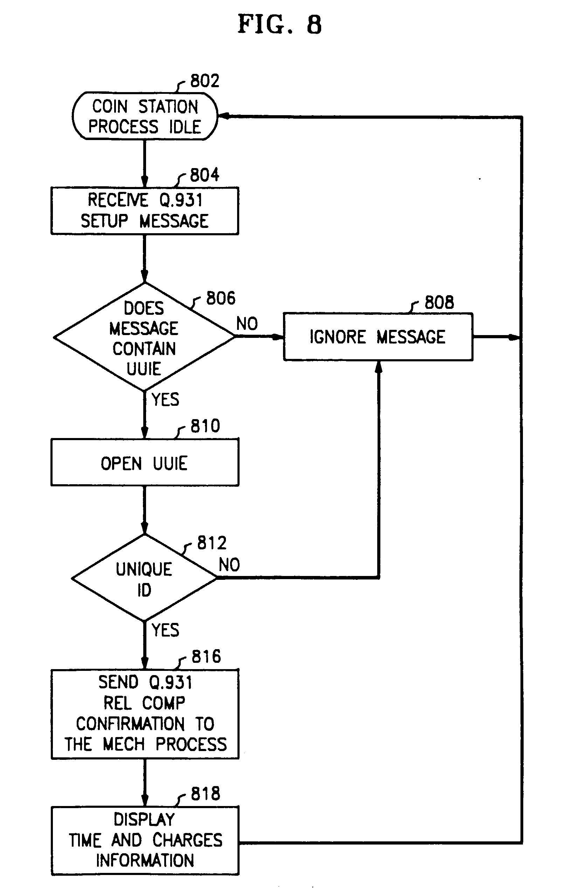

FIG. 8 is flow diagram of the actions taken by the coin station process when a back party requests time and charges information. The coin station process is idle (block 802) until a Q.931 SETUP message is received from a switching system (action block 804). The process checks whether the SETUP message contains a UUIE (test 806). If it does not, the process ignores the SETUP message without displaying any information (action block 808). Otherwise, the process "opens" the UUIE (action block 810) and verifies if the UUIE has a unique coin station identifier (UCSI) (310 in FIG. 3), that matches the UCSI generated for the last outgoing call (test 812). This UCSI verifies that the information in the UUIE is associated with the back party. If the UCSI does not match (test 812), the process ignores the SETUP message without displaying any information (action block 808). If, on the other hand, if the UCSI matches that generated for the last outgoing call, the process sends a Q.931 REL COMP confirmation message to the modified MECH process (action block 816) to terminate the call and displays the time and charges information on the display screen of the phone (action block 818). The coin station process then returns to idle (block 802).

Although the present invention is described using the principles of ISDN, other communication facilities could be used. For example, the sending of call data from the station to the operator assistance system could be accomplished using analog data transmission over a conventional analog line during the initial call request period.

It is to be understood that the above-described procedures are merely illustrative of the principles of the invention and many variations may be devised by those skilled in the art without departing from the scope of the invention.

## Claims

1. A method of setting up an operator assistance call from a back party station to a forward party station, characterized by:
collecting call information at the back party station (150), the information comprising operator assistance class of charge (COC) data for the back party station;
sending a call setup data message, comprising the collected call information from the back party station to an operator assistance system (114), said operator assistance system for setting up connections among a plurality of lines (162), trunks (133) and operator positions (124) connected thereto; and
responsive to a receipt of the setup message, processing said call setup data message in the system (106), for extending a connection from the back party toward the forward party if the COC is one of a predetermined class of charge types.

2. A method as claimed in claim 1 wherein the sending step comprises:
checking the validity of the call information (206)
if the checking step indicates valid call information, forming a user information data block from the call information (244); and
placing the user information data block in the call setup message (244).

3. A method as claimed in claim 1 wherein the station is connected to the system via an integrated services digital network (ISDN) basic rate interface (BRI) (162), and wherein the sending step comprises;
the station sending the call setup message to the system over a D-channel of the BRI.

4. A method as claimed in claim 1 wherein the extending step comprises:
responsive to the receipt of the call setup message by the operator assistance system, sending the call information to an operator assistance program process (114) of a control processor (110) of the system for controlling the extension of the connection.

5. A method as claimed in claim 1, wherein the extending step comprises extending the connection without setting up a connection to an operator position (112).

6. A method as claimed in claim 1, wherein responsive to the receipt of an answer signal from the forward party, an operator assistance program process (114) of a control processor (110) of the operator assistance system controls a set up of a connection between a communications link (133) extending toward the forward party (146) and an operator position (124), and displaying the call information at the operator position (114, 115).

7. A method as claimed in claim 1, wherein the extending step comprises by-passing a connection to an operator position prior to extending the connection toward the forward party (110).

8. A method as claimed in claim 1, wherein the back party station comprises an intelligent phone (150), the intelligent phone prompting the back party for input (154).

9. A method as claimed in claim 8, wherein responsive to input from the back party, the intelligent phone (150) collects call information comprising said operator assistance class of charge (COC) data (159, 160).

10. A method as claimed in claim 9, comprising the step of the intelligent phone (150) checking the validity of the call information (159, 160).

11. A method as claimed in claim 10, comprising the step of the intelligent phone (150) forming a user information data block from the call information if the call information is valid.

12. A method as claimed in claim 11, comprising the step of the intelligent phone (150) placing the user information data block in said call setup message.

13. A method as claimed in claim 8, wherein the intelligent phone (150) is equipped to handle CCITT (International Consultative Committee for Telephone and Telegraph) standard Layer 3 (Q.931) control messages defined for message associated user-to-user information (MA-UUI), and wherein the back party station is connected to the system via an integrated services digital network (ISDN) basic rate interface (BRI) (162).

14. A method as claimed in claim 13, comprising the steps of:
the intelligent phone (150) forming a user-to-user information element (UUIE) comprising the call information, if the call information is valid;
the intelligent phone (150) placing the UUIE in a Q.931 SETUP message;
the intelligent phone (150) sending the SETUP message to the operator assistance system over a D-channel of the BRI (162); and
responsive to the receipt of the SETUP message by the operator assistance system (114), sending the UUIE comprising the call information to an operator assistance program process of a control processor (110) of the operator assistance system for controlling the extension of a call.

15. Apparatus for signaling an operator assistance call request from a back party to a forward party comprising:
a switching network (132), connectable to the back party, a trunk or line (162) extendible to the forward party, and an operator position (124); and
characterized by:
control means (110), operable under the control of the operator assistance process (106), for controlling the following operations:
responsive to receipt of a call information data message comprising class of charge (COC) information from the back party, if the COC is one of a predetermined class of charge types, extending a connection from the back party through the network (112) towards the forward party (146) via a trunk or line (133) without connecting an operator position; and
responsive to receipt of an answer signal from the forward party (146), setting up a connection in the network (112) between the operator position and the forward party and displaying the call information at an operator position (124).

16. Apparatus as claimed in claim 15 wherein the switching network (112) communicates with the back party via an integrated services digital network (ISDN) basic rate interface (BRI) (162), the switching network further comprising:
means for passing CCITT (International Consultative Committee for Telephone and Telegraph) standard Layer 3 (Q.931) call control messages defined for message associated user-to-user information (MA-UUI) from the back party (150) to the control means (162).

17. Apparatus as claimed in claim 16, wherein said means for passing is adapted to send the data message to the operator assistance system over a D-channel of an integrated services digital network (ISDN) basic rate interface (BRI) (162).

18. Apparatus as claimed in claim 15, comprising means for collecting class of charge (COC) information from the back party (150).

19. The apparatus of claim 15, comprising means for forming a data message comprising the COC information (150).

20. Apparatus as claimed in claim 19, comprising means for sending the data message toward an operator assistance system for handling of the call (112),
said operator assistance system (106) comprising means responsive to the receipt of an answer signal from a forward party (113) for controlling a setup of a connection between a communications link extending toward the forward party and an operator position connected to said operator assistance system and for displaying the call information of said data message at the operator position.

## Patentansprüche

1. Verfahren zum Aufbauen einer handvermittelten Verbindung von einer rufenden Teilnehmerstation zu einer gerufenen Teilnehmerstation,
gekennzeichnet durch folgende Verfahrensschritte:
Sammeln von Anrufinformationen bei der rufenden Teilnehmerstation (150), wobei die Informationen Handvermittlungs-Gebührenklassen (Class of Charge, COC)-Daten für die rufende Teilnehmerstation enthalten,
Senden einer Verbindungsaufbaudaten-Meldung, die die gesammelte Anrufinformation der rufenden Teilnehmerstation enthält, an ein Handvermittlungssystem (114), welches Verbindungen zwischen mehreren Teilnehmer-Anschlußleitungen (162), Verbindungsleitungen (133) und daran angeschlossene Bedieneinrichtungen (124) aufbaut,
unter Ansprechen auf den Empfang der Aufbaumeldung wird die Verbindungsaufbau-Datenmeldung in einem System (106) verarbeitet, um eine Verbindung von dem rufenden Teilnehmer zum gerufenen Teilnehmer herzustellen, wenn die COC eine Gebührenklasse einer Gruppe von vorbestimmten Gebührenklassentypen ist.

2. Verfahren nach Anspruch 1,
dadurch gekennzeichnet, daß der Sendeschritt folgende Verfahrensschritte umfaßt:
Überprüfen der Gültigkeit der Anrufinformationen (206), und,
wenn der Prüfschritt eine gültige Anrufinformation angibt, wird ein Benutzer-Informationsdatenblock aus der Anrufinformation (244) gebildet, und
Einfügen des Benutzer-Informationsdatenblocks in die Verbindungsaufbau-Meldung (244).

3. Verfahren nach Anspruch 1,
dadurch gekennzeichnet, daß die Station mit dem System über eine Basisraten-Schnittstelle (Basic Rate Interface, BRI) eines Dienste-integrierenden digitalen Netzes (Integrated Services Digital Network, ISDN) verbunden ist und daß der Sendeschritt folgenden Schritt aufweist:
die Station sendet die Verbindungsaufbau-Meldung über einen D-Kanal der Basisraten-Schnittstelle zum System.

4. Verfahren nach Anspruch 1,
dadurch gekennzeichnet, daß der Schritt der Verbindungsherstellung folgende Verfahrensschritte umfaßt:
unter Ansprechen auf den Empfang der Verbindungsaufbau-Meldung durch das Handvermittlungssystem wird die Anrufinformation zu einem Handvermittlungs-Programmprozeß (114) eines Steuerprozessors (110) des Systems gesendet, um den Verbindungsaufbau zu steuern.

5. Verfahren nach Anspruch 1,
dadurch gekennzeichnet, daß der Schritt der Verbindungsherstellung folgenden Schritt umfaßt:
Herstellen der Verbindung, ohne daß eine Verbindung zu einer Bedieneinrichtung (112) aufgebaut wird.

6. Verfahren nach Anspruch 1,
dadurch gekennzeichnet, daß unter Ansprechen auf den Empfang eines Antwortsignals von dem gerufenen Teilnehmer ein Handvermittlungs-Programmprozeß (114) eines Steuerprozessors (110) des Handvermittlungssystems den Aufbau einer Verbindung zwischen einer Kommunikationsverbindung (133), die sich zum gerufenen Teilnehmer (146) erstreckt, und einer Bedieneinrichtung (124) steuert und die Anrufinformationen an der Bedieneinrichtung (114, 115) darstellt.

7. Verfahren nach Anspruch 1,
dadurch gekennzeichnet, daß der Schritt der Verbindungsherstellung folgenden Verfahrensschritt umfaßt:
Überbrücken einer Verbindung zu einer Bedieneinrichtung, bevor die Verbindung zum gerufenen Teilnehmer (110) hergestellt wird.

8. Verfahren nach Anspruch 1,
dadurch gekennzeichnet, daß die rufende Teilnehmerstation ein intelligentes Telefon (150) enthält, das den rufenden Teilnehmer zur Eingabe (154) auffordert.

9. Verfahren nach Anspruch 8,
dadurch gekennzeichnet, daß unter Ansprechen auf die Eingabe des rufenden Teilnehmers das intelligente Telefon (150) Anrufinformationen sammelt, die die Handvermittlungs-Gebührenklassen (COC)-Daten (159, 160) enthalten.

10. Verfahren nach Anspruch 9,
gekennzeichnet durch den Schritt:
das intelligente Telefon (150) überprüft die Gültigkeit der Anrufinformationen (159, 160).

11. Verfahren nach Anspruch 10,
gekennzeichnet durch folgenden Schritt:
das intelligente Telefon (150) bildet einen Benutzer-Informationsdatenblock aus der Anrfinformation, wenn die Anrufinformation gültig ist.

12. Verfahren nach Anspruch 11,
gekennzeichnet durch folgenden Verfahrensschritt:
das intelligente Telefon (150) fügt den Benutzer-Informationsdatenblock in die Verbindungsaufbau-Meldung ein.

13. Verfahren nach Anspruch 8,
dadurch gekennzeichnet, daß das intelligente Telefon (150) derart ausgebildet ist, daß es Steuermeldungen der durch die CCITT (International Consultative Committee for Telephone and Telegraph)-Norm festgelegten Schicht 3 (Q.931), die für eine einer Meldung zugeordnete Benutzer-zu-Benutzer-Information (Message Associated User-to-User Information, MA-UUI) definiert ist, abwickelt, und daß die rufende Teilnehmerstation mit dem System über eine Basisraten-Schnittstelle (BRI) (162) eines Dienste-integrierenden, digitalen Netzes (ISDN) verbunden wird.

14. Verfahren nach Anspruch 13,
kennzeichnet durch folgende Schritte:
das intelligente Telefon (150) erzeugt ein Benutzerzu-Benutzer-Informationselement (User-to-User Information Element, UUIE) umfassend die Anrufinformation, wenn die Rufinformation gültig ist,
das intelligente Telefon (150) fügt die UUIE in eine Q.931-AUFBAU-Meldung ein,
das intelligente Telefon (150) sendet die AUFBAU-Meldung zum Handvermittlungssystem über einen D-Kanal der BRI (162), und
unter Ansprechen auf den Empfang der AUFBAU-Meldung durch das Handvermittlungssystem (114) wird das UUIE umfassend die Anrufinformation zu einem Handvermittlungs-Programmprozeß eines Steuerprozessors (110) des Handvermittlungssystems zur Steuerung der Herstellung einer Verbindung gesendet.

15. Vorrichtung zum Signalisieren einer Handvermittlungs-Anrufanforderung von einem rufenden Teilnehmer zu einem gerufenen Teilnehmer mit folgenden Merkmalen:
ein Vermittlungsnetz (132), das mit dem rufenden Teilnehmer verbindbar ist,
eine Verbindungsleitung oder Teilnehmer-Anschlußleitung (162), die zum gerufenen Teilnehmer aufbaubar ist,
einer Bedieneinrichtung (124),
gekennzeichnet durch folgende Merkmale:
eine Steuereinrichtung (110), die unter Steuerung eines Handvermittlungsprozesses (106) betreibbar ist, zum Steuern der folgenden Operationen:
unter Ansprechen auf den Empfang einer Anrufinformationsdaten-Meldung, die eine Gebührenklassen (Class of Charge, COC)-Information enthält, vom rufenden Teilnehmer, wird, wenn die COC eine Gebührenklasse einer Gruppe von vorbestimmten Gebührenklassentypen ist, eine Verbindung vom rufenden Teilnehmer über das Netzwerk (112) zum gerufenen Teilnehmer (146) über eine Verbindungsleitung oder eine Teilnehmer-Anschlußleitung (133) ohne Anschaltung einer Bedieneinrichtung hergestellt, und
unter Ansprechen auf ein Antwortsignal von dem gerufenen Teilnehmer (146) wird eine Verbindung in dem Netz (112) zwischen der Bedieneinrichtung und dem gerufenen Teilnehmer aufgebaut und die Anrufinformation an einer Bedieneinrichtung (124) dargestellt.

16. Vorrichtung nach Anspruch 15,
dadurch gekennzeichnet, daß das Vermittlungsnetz (112) mit dem rufenden Teilnehmer über eine Basisraten-Schnittstelle (BRI) (162) eines Dienste-integrierenden digitalen Netzes (ISDN) kommuniziert, wobei das Vermittlungsnetz folgende Merkmale enthält:
eine Einrichtung zum Übertragen von Anrufsteuermeldungen der durch den CCITT- (International Consultativ Committee for Telephone and Telegraph) -Standard definierten Schicht 3 (Q.931), die eine einer Meldung zugeordnete Benutzer-zu-Benutzer-Information (MA-UUI) definiert, vom rufenden Teilnehmer (150) zur Steuereinrichtung (162).

17. Vorrichtung nach Anspruch 16,
dadurch gekennzeichnet, daß die Übertragungseinrichtung zum Senden der Datenmeldung zum Handvermittlungssystem über einen D-Kanal einer Basisraten-Schnittstelle (BRI) (162) eines Dienste-integrierenden, digitalen Netzes (ISDN) ausgebildet ist.

18. Vorrichtung nach Anspruch 15,
gekennzeichnet durch eine Einrichtung zum Sammeln von Gebührenklassen- (COC) -Informationen von dem rufenden Teilnehmer (150).

19. Vorrichtung nach Anspruch 15,
gekennzeichnet durch eine Einrichtung zum Erzeugen einer Datenmeldung mit der COC-Information (150).

20. Vorrichtung nach Anspruch 19,
gekennzeichnet durch eine Einrichtung zum Senden der Datenmeldung zu einem Handvermittlungssystem zum Abwickeln des Anrufs (112),
wobei das Handvermittlungssystem (106) folgende Merkmale aufweist:
eine Einrichtung, die unter Ansprechen auf den Empfang eines Antwortsignals von einem gerufenen Teilnehmer (113) den Aufbau einer Verbindung zwischen einer Übertragungsverbindung, die sich zum gerufenen Teilnehmer erstreckt, und einer Bedieneinrichtung steuert, die mit dem Handvermittlungssystem verbunden ist, und die Anrufinformation der Datenmeldung auf der Bedieneinrichtung darstellt.

## Revendications

1. Procédé d'établissement d'un appel avec assistance d'opératrice d'un poste demandeur vers un poste destinataire, caractérisé par :
la collecte d'informations d'appel dans le poste demandeur (150), les informations comprenant des données de classe de tarification (COC) avec assistance d'opératrice pour le poste demandeur ;
l'envoi d'un message de données d'établissement d'appel, comprenant les informations d'appel recueillies du poste demandeur, à un système (114) d'assistance d'opératrice, le système d'assistance d'opératrice étant destiné à établir des connexions entre une pluralité de lignes (162), de jonctions (133), et de positions d'opératrices (124) connectées à celles-ci ; et
en réponse à une réception du message d'établissement, le traitement du message de données d'établissement d'appel, dans le système (106), pour étendre une connexion du demandeur vers le destinataire, si la classe de tarification est une classe prédéterminée de types de tarification.

2. Procédé suivant la revendication 1, dans lequel l'étape d'envoi comprend :
la vérification de la validité des informations d'appel (206),
si l'étape de contrôle indique des informations d'appels valides, la constitution d'un bloc de données d'informations d'utilisateur à partir des informations d'appel (244) ; et
l'introduction du bloc de données d'informations d'utilisateur dans le message (244) d'établissement d'appel.

3. Procédé suivant la revendication 1, dans lequel le poste est connecté au système par l'intermédiaire d'une interface (162) à tarif de base (BRI) d'un réseau numérique à intégration de service (RNIS), et dans lequel l'étape d'envoi comprend :
l'envoi par le poste du message d'établissement d'appel au système par l'intermédiaire d'un canal D de l'interface BRI.

4. Procédé suivant la revendication 1, dans lequel l'étape d'extension comprend :
en réponse à la réception du message d'établissement d'appel par le système d'assistance d'opératrice, l'envoi des informations d'appel à un processus (114) d'un programme d'assistance d'opératrice d'un processeur (110) de commande du système destiné à commander l'extension de la connexion.

5. Procédé suivant la revendication 1, dans lequel l'étape d'extension comprend l'extension de la connexion sans établir de connexion avec une position (112) d'opératrice.

6. Procédé suivant la revendication 1, dans lequel, en réponse à la réception d'un signal de réponse du destinataire, un processus (114) d'un programme d'assistance d'opératrice d'un processeur (110) de commande du système d'assistance d'opératrice commande l'établissement d'une connexion entre une liaison (133) de communication s'étendant vers le destinataire (146) et une position (124) d'opératrice, et l'affichage des informations d'appel à la position d'opératrice (114, 115).

7. Procédé suivant la revendication 1, dans lequel l'étape d'extension comprend le contournement d'une connexion vers une position d'opératrice avant l'extension de la connexion vers le destinataire (110).

8. Procédé suivant la revendication 1, dans lequel le poste de demandeur comprend un téléphone (150) intelligent, le téléphone intelligent invitant le demandeur à fournir des entrées (154).

9. Procédé suivant la revendication 8, dans lequel, en réponse à une entrée fournie par le demandeur, le téléphone (150) intelligent recueille des informations d'appel comprenant les données (159, 160) de classe de tarification (COC) avec assistance d'opératrice.

10. Procédé suivant la revendication 9, comprenant l'étape effectuée dans le téléphone (150) intelligent consistant à vérifier la validité des informations (159, 160) d'appel.

11. Procédé suivant la revendication 10, comprenant l'étape effectuée dans le téléphone (150) intelligent consistant à constituer un bloc de données d'informations d'utilisateur à partir des informations d'appel si les informations d'appel sont valides.

12. Procédé suivant la revendication 11, comprenant l'étape effectuée dans le téléphone (150) intelligent consistant à introduire le bloc de données d'informations d'utilisateur dans le message d'établissement d'appel.

13. Procédé suivant la revendication 8, dans lequel le téléphone (150) intelligent est équipé de façon à gérer des messages de commande de Couche 3 normalisée (Q.931) conformément à la norme CCITT (Comité consultatif International Télégraphique et Téléphonique), définis pour des informations d'utilisateur-à-utilisateur associées à des messages (MA-UUI), et dans lequel le poste du demandeur est connecté au système par l'intermédiaire d'une interface (162) à tarif de base (BRI) d'un réseau numérique à intégration de services (RNIS).

14. Procédé suivant la revendication 13, comprenant les étapes dans lesquelles :
le téléphone (150) intelligent crée un élément d'information d'utilisateur-à-utilisateur (UUIE) comprenant les informations d'appel, si les informations d'appel sont valides,
le téléphone (150) intelligent introduit l'élément d'information UUIE dans un message d'ETABLISSEMENT Q.931 ;
le téléphone (150) intelligent envoie le message d'ETABLISSEMENT au système à assistance d'opératrice par l'intermédiaire d'un canal D de l'interface (162) BRI ; et
en réponse à la réception du message d'ETABLISSEMENT par le système (114) à assistance d'opératrice, on envoie l'élément d'information UUIE comprenant les informations d'appel à un processus d'un programme d'assistance d'opératrice d'un processeur (110) de commande du système d'assistance d'opératrice pour commander l'extension d'un appel.

15. Appareil pour signaler une demande d'appel avec assistance d'opératrice d'un demandeur vers un destinataire, comprenant :
un réseau (132) de commutation, pouvant être connecté au demandeur, une jonction ou une ligne (162) pouvant être prolongée jusqu'au destinataire, et une position (124) d'opératrice ; et
caractérisé par
des moyens (110) de commande pouvant fonctionner sous le contrôle du processus (106) d'assistance d'opératrice, pour commander les opérations suivantes :
en réponse à la réception d'un message de données d'informations d'appel comprenant des informations de classe de tarification (COC) provenant du demandeur, si la classe de tarification appartient à une classe prédéterminée de types de tarification, on prolonge une connexion depuis le demandeur, par l'intermédiaire du réseau (112), vers le destinataire (146), par l'intermédiaire d'une jonction ou d'une ligne (133) sans connecter une position d'opératrice ; et
en réponse à la réception d'un signal ce réponse provenant du destinataire (146), cn établit une connexion dans le réseau (112) entre la position d'opératrice et le destinataire, et on affiche les informations d'appel à une position (124) d'opératrice.

16. Appareil suivant la revendication 15, dans lequel le réseau (112) de commutation communique avec le demandeur par l'intermédiaire d'une interface (162) à tarif de base (BRI) d'un réseau numérique à intégration de services (RNIS), le réseau de commutation comprenant en outre :
des moyens pour laisser transmettre aux moyens (162) de commande des messages de commande d'appel de la Couche 3 normalisée (Q.931) du CCITT (Comité Consultatif International Télégraphique et Téléphonique), définis pour des informations d'utilisateur-à-utilisateur associées à des messages (MA-UUI) provenant du demandeur (150).

17. Appareil suivant la revendication 16, dans lequel lesdits moyens de transmission sont conçus pour envoyer le message de données au système d'assistance d'opératrice par l'intermédiaire d'un canal D d'une interface (162) à tarif de base (BRI) d'un réseau numérique à intégration de services (RNIS).

18. Appareil suivant la revendication 15, comprenant des moyens pour recueillir des informations de classe de tarification (COC) du demandeur (150).

19. Appareil suivant la revendication 15, comprenant des moyens pour former un message de données comprenant les informations de classe de tarification (COC) (150).

20. Appareil suivant la revendication 19, comprenant des moyens pour envoyer le message de données vers un système d'assistance d'opératrice destiné à traiter l'appel (112),
le système (106) d'assistance d'opératrice comprenant des moyens sensibles à la réception d'un signal de réponse d'un destinataire (113) pour commander l'établissement d'une connexion entre une liaison de communications se prolongeant vers le destinataire et une position d'opératrice connectée au système d'assistance d'opératrice, et pour afficher les informations d'appel du message de données à la position d'opératrice.
